# EUROPÄISCHE PATENTSCHRIFT

(11) **EP 1 301 640 B1**
(45) Veröffentlichungstag und Bekanntmachung des Hinweises auf die Patenterteilung: **01.10.2003**
(21) Anmeldenummer: 01956316.2
(22) Anmeldetag: 18.07.2001
(51) Int. Cl.: C21D 9/00, F27D 5/00, B23Q 7/14, B23Q 17/22, B23P 19/00

(54) **VERFAHREN UND VORRICHTUNG ZUM EINSETZEN LÄNGLICHER WERKSTÜCKE IN EINEN TRANSPORTROST**
METHOD AND DEVICE FOR INSERTING ELONGATED WORKPIECES INTO A TRANSPORT GRATE
PROCEDE ET DISPOSITIF DE MISE EN PLACE DE PIECES A USINER ALLONGEES DANS UNE GRILLE DE TRANSPORT

(30) Priorität: 19.07.2000 DE 10035450
(43) Veröffentlichungstag der Anmeldung: 16.04.2003
(73) Patentinhaber: Hermann Spicher GmbH, 51069 Köln (DE)
(72) Erfinder: SPICHER, Hermann-Josef, 51469 Bergisch Gladbach (DE)
(74) Vertreter: Lippert, Stachow, Schmidt & Partner
(86) Internationale Anmeldenummer: DE0102629
(87) Internationale Veröffentlichungsnummer: WO02010464

(56) Entgegenhaltungen:
- WO-A-98/13172
- PATENT ABSTRACTS OF JAPAN vol. 009, no. 007 (M-350), 12. Januar 1985 (1985-01-12) & JP 59 156629 A (KAWASAKI JUKOGYO KK), 5. September 1984 (1984-09-05)
- PATENT ABSTRACTS OF JAPAN vol. 1995, no. 11, 26. Dezember 1995 (1995-12-26) & JP 07 227741 A (DAISHOWA SEIKI CO LTD), 29. August 1995 (1995-08-29)

## Beschreibung

Die Erfindung betrifft ein Verfahren zum Einsetzen länglicher Werkstücke aus Stahl in einen Transportrost, der zur Wärmebehandlung der Werkstücke gemeinsam mit diesen durch einen Wärmebehandlungsofen gefördert werden muss, wobei der Transportrost mit Aufstellnestern für die Werkstücke und in einem Abstand über den Aufstellnestern mit Halteöffnungen versehen ist, die Werkstücke durch die Halteöffnungen hindurchgesteckt und im eingesteckten Zustand von den Halteöffnungen seitlich auf Abstand gehalten werden, und die Sollposition jeder Halteöffnung in vertikaler Flucht über einem Aufstellnest liegt, jedoch die Istposition jeder Halteöffnung aus der vertikalen Flucht abweichen kann.

Der Transportrost wird gelegentlich auch als Beschickungskorb bezeichnet, weil er aus Stegringen und Verbindungsstegen gebildet ist, die an ein Korbgeflecht erinnern. Die Sollpositionen und die Istpositionen der Halteöffnungen sowie der Aufstellnester können deshalb relativ stark voneinander abweichen, weil durch die wiederholte Wärmebehandlung eine Verspannung und ein ungleichmäßiger Verzug sowie ein Wachstum der Transportroste hervorgerufen wird.

Für die Wärmebehandlung werden die Transportroste mit den Stahlwerkstücken in einen Wärmebehandlungsofen eingesetzt oder im kontinuierlichen Fluss durch einen Wärmebehandlungsofen hindurch gefördert.

Um Beschädigungen der Werkstücke durch Aneinanderstoßen zu verhindern und um eine gleichmäßige und rasche Erwärmung der Werkstücke zu ermöglichen, sind diese geordnet in den Transportrosten aufgestellt. Ein Transportrost besteht aus einer besonderen gegossenen Legierung, die einem wiederholten Einsetzen oder Durchlaufen des Wärmebehandlungsofens gut standhält.

Durch das wiederholte Erwärmen des Transportrostes in dem Wärmebehandlungsofen sowie das anschließende mehr oder weniger schnelle Abkühlen beziehungsweise Abschrecken können die Spannungen in dem Transportrost zum Zerreißen einzelner Stegringe oder Verbindungsstege führen. Darüber hinaus ist mit der Anwesenheit des Transportrostes in dem Wärmebehandlungsofen das erwähnte Wachstum verbunden, das seine Ursache unter anderem in einer Aufkohlung und Gefügeänderung des Gussmaterials hat.

Die Deformierung des Transportrostes, insbesondere gerissene Stegringe oder Verbindungsstege führen dazu, dass sich ein zur Wärmebehandlung vorgesehenes Werkstück nicht mehr in eine der Halteöffnungen des Transportrostes einstecken lässt. Bei mehrteiligen zerlegbaren Transportrosten kommt es vor, dass zusammengehörige Teile des Transportrostes nicht mehr zusammengefügt werden können.

Bisher werden derartige Transportroste manuell mit den für die Wärmebehandlung vorgesehenen Werkstücken beschickt. Die Werkstücke müssen sehr vorsichtig in den Transportrost eingesetzt werden, um die Werkstückoberfläche dabei nicht zu beschädigen. Insbesondere ist darauf zu achten, dass das Werkstück beim Einsetzen in den Transportrost nicht seitlich an dem Verbindungssteg anstößt oder daran schabt. Durch unsachgemäße Beschickung hervorgerufene Riefen oder sonstige Beschädigungen der Werkstückoberfläche können zu Ausschuß des Werkstücks führen. Die Tätigkeit ist für das Personal sehr anstrengend. Dies, weil eine Vielzahl von Werkstücken in Akkordarbeit eingesetzt werden müssen. Zudem haben die einzelnen Werkstücke häufig ein hohes Gewicht.

Alternativen zu einer Beschickung der Transportroste per Hand wurden bisher nicht gesehen, weil das menschliche Auge zur Erfassung der richtigen Position der Halteöffnungen unerlässlich schien. Wegen der schmutzigen und rauhen Industrieumgebung ist der Einsatz eines optischen Systems nicht ausreichend zuverlässig.

Der Erfindung liegt die Aufgabe zugrunde, ein Verfahren und eine Vorrichtung vorzuschlagen, mit dem längliche Werkstücke in Transportroste eingesteckt werden können, wobei die Transportroste wegen ungleichmäßigem Wärmebehandlungsverzug jeweils unterschiedliche Istpositionen für die Halteöffnungen der Werkstücke aufweisen dürfen.

Erfindungsgemäß wird diese Aufgabe dadurch gelöst, dass ein Beschickungsroboters vorgesehen ist, dessen Wege und Bewegungswinkel mit einem Positionsmesssystem gemessen und an eine Steuerelektronik weitergeleitet werden, dass der Beschickungsroboter einen Fühldorn in vertikaler Lage über eine gespeicherte Sollposition einer Halteöffnung des Transportrostes bewegt, dass das freie der Halteöffnung zugekehrte Ende des Fühldorns einen Zentrierkonus aufweist, dass der Zentrierkonus mit seitlichem Spiel in die Halteöffnung eingetaucht wird, wobei der Beschickungsroboter den Fühldorn lagegetreu in vertikaler Ausrichtung festhält, dass die übrigen Bewegungsachsen des Beschickungsroboters derart nachgiebig gestellt werden, dass der Beschickungsroboter während der Eintauchbewegung des Fühldorns selbsttätig in die Istposition der Halteöffnung nachgeführt wird, dass der Beschickungsroboter die gefundene Istposition speichert, dass der Beschickungsroboter ein Werkstück greift und in die gespeicherte Istposition der Halteöffnung bewegt, und dass das Werkstück dann durch die Halteöffnung hindurchgesteckt und in dem Aufstellnest des Transportrostes aufgestellt wird.

Die Funktion dieses Verfahrens beruht darauf, dass in der Steuerelektronik des Beschickungsroboters die Sollposition jeder einzelnen Halteöffnung des verwendeten Transportrosttyps gespeichert ist. Die Positionierung des Transportrost in einer bestimmten vorgegebenen Beschickungsposition genügt, um mit dem Zentrierkonus des Fühldorns jede Halteöffnung zu ertasten. Dies auch dann, wenn deren Istposition wegen Wachstums des Transportrostes von der Sollposition abweicht. Für eine einwandfreie Funktion ist es erforderlich, dass der Zentrierkonus sich stets mit geringem seitlichen Spiel in die Halteöffnung einfädeln lässt, egal wie weit die Istposition der Halteöffnung von der Sollposition abweicht. Dies ist gewährleistet, weil der kegelstumpfförmige Zentrierkonus ein Ende aufweist, das so dünn ist, dass der in der Sollposition der Halteöffnung abgesenkte Fühldorn gerade noch mit großer Exzentrizität in die Halteöffnung eingetaucht werden kann, wenn deren Istposition stark von der Sollposition abweicht. Die schräge Kegelfläche stößt bei weiterm Absenken rasch an der Halteöffnung an. Ab dann verursacht der Fühldorn eine seitliche Schwenkbewegung des Beschickungsroboters. Die Schwenkbewegung führt den Fühldorn zur Istposition der Halteöffnung hin. Die Mittelachse des Fühldorns nähert sich also dem Zentrum der Halteöffnung mehr und mehr an. Der große Querschnitt des Zentrierkonus weist einen etwas geringeren Durchmesser auf, als die Halteöffnung. Die Ungenauigkeit der von dem Fühldorn ertasteten Istposition entspricht daher dem maximalen Spaltmaß zwischen dem großen Querschnitt des Zentrierkonus und der Halteöffnung.

Die auf diese Weise durch Nachführung des Beschickungsroboters beziehungsweise des Fühldorns ertastete Position der Halteöffnung, wird dann als Istposition gespeichert. Die ermittelte Istposition kann der Beschickungsroboter mit Hilfe seines Positionsmesssystems jederzeit reproduzierbar anfahren und exakt an dieser Stelle ein Werkstück in den Transportrost einsetzen. Auf Bedienungspersonal oder ein besonderes optisches System zum Auffinden der Halteöffnung kann verzichtet werden.

Bei einer Weiterbildung dieses Verfahrens ist vorgesehen, dass der Beschickungsroboter den Fühldorn zunächst in jede der Halteöffnungen des Transportrostes eintaucht und dabei die Istposition der jeweiligen Halteöffnung zwischengespeichert wird, und dass der Beschickungsroboter dann die Werkstücke nacheinander greift und jeweils ein Werkstück an einer der gespeicherten Istpositionen in den Transportrost einsetzt. Durch diese einfache Maßnahme kann die Beschickung eines Transportrostes beschleunigt werden, weil der Fühldorn nicht jedes Mal nach Ertasten einer Halteöffnung abgelegt werden muss, damit der Greifer des Beschickungsroboters dann ein Werkstück einsetzen kann und der Fühldorn nachfolgend wieder von dem Greifer aufgenommen werden muss, um die nächste Halteöffnung zu ertasten.

Hilfreich ist es auch, wenn der Fühldorn während des Eintauchens in eine Halteöffnung des Transportrostes bis auf den Grund des Aufstellnestes des Transportrostes bewegt wird, und dass die in dem Aufstellnest erreichte Tiefenposition des Fühldorns gespeichert wird. Auf diese Weise wird eine Beschädigung des Aufstellnestes aufgespürt, wenn der Fühldorn nicht eine erforderliche Mindesttiefe erreicht. Dies kann beispielsweise dann der Fall sein, wenn der Rand des Aufstellnestes durch innere Spannungen geborsten und eine Aufstellung des Werkstücks in diesem Aufstellnest nicht mehr möglich ist.

Zweckmäßig unterbleibt das Einstecken eines Werkstücks in eine Halteöffnung dann, wenn der Fühldorn nicht in diese Halteöffnung einsteckbar war oder die Einstecktiefe ein bestimmtes Tiefenmaß unterschritten hat.

Damit dabei keine Beschädigung des Fühldorns auftreten kann, wird die Einsteckkraft für den Fühldorn günstigerweise auf einen Grenzwert eingestellt.

Einfacherweise wird durch ein Erreichen oder eine Überschreitung des Grenzwertes der Einsteckkraft bewirkt, dass die Einsteckbewegung des Fühldorns in eine Entnahmebewegung desselben umgekehrt wird. Auf diese Weise wird eine mechanische Beanspruchung zwischen dem Fühldorn und dem Transportrost rasch beendet und keine Beschädigung des Werkstücks riskiert.

Darüber hinaus wird zweckmäßigerweise durch ein Erreichen oder eine Überschreitung des Grenzwertes der Einsteckkraft bewirkt, dass kein Werkstück in die entsprechende Halteöffnung eingesetzt wird.

Vorzugsweise ist der Transportrost während des Eintauchens des Fühldorns in die Halteöffnung gegen seitliches Verrutschen gesichert. Dies ist insbesondere dann von Vorteil, wenn zunächst die Istpositionen aller Halteöffnungen eines Transportrostes erfasst und zwischengespeichert werden, damit die erfassten Istpositionen auch für die Beschickung erhalten bleiben und sich nicht verschieben.

Weil der Verzug der Transportroste sowie deren Breiten- und Längenwachstum so stark sein kann, dass sich der Fühldorn, wenn er eine Sollposition anfährt, nicht in einer Halteöffnung einfahren lässt, wird vorher geprüft, ob sowohl das Längen- und Breitenmaß als auch die Lage des Transportrostes innerhalb zulässiger Abweichungen liegen. Weil ein stark verzogener oder ein in Länge und Breite gewachsener Transportrost zu Schwierigkeiten bei der Ertastung der Halteöffnung durch den Fühldorn führt, wird ein Transportrost, der außerhalb der zulässigen Abweichungen liegt, aus dem Betrieb genommen und ein anderer Transportrost geprüft und beschickt. Die Prüfung der Abmessungen und der Lage des Transportrostes geschieht daher, bevor mit dem Fühldorn begonnen wird, die Istpositionen der Halteöffnungen zu ertasten.

Zur Durchführung des Verfahrens wird eine Vorrichtung zur automatischen Beschickung eines mehrteiligen Transportrostes vorgeschlagen, in den längliche Werkstücke in der Weise eingesetzt werden, wie Getränkeflaschen in eine mit Einzelstellplätzen für jede Getränkeflasche versehene Getränkekiste, wobei der Transportrost Aufstellnester für die Werkstücke sowie in einem Abstand über den Aufstellnestern Halteöffnungen aufweist, mit einer Beschickungsstation, die eine Aufstellebene für den Transportrost aufweist, eine Arretiervorrichtung zur vorübergehenden Fixierung des Transportrostes in der Beschickungsstation, einem Beschickungsroboter mit einem Greifer, einem von dem Greifer handhabbaren Fühldorn und einem an dem Fühldorn vorgesehenen Zentrierkonus, der an dem freien, im Betrieb dem Transportrost zugekehrten Ende des Fühldorns angeordnet ist. Mit der vorgeschlagenen Konstruktion ist es möglich, einen Transportrost in einer Beschickungsstation auf einer Aufstellebene anzuordnen und für einen Abtastvorgang sowie für die nachfolgende Beschickung mit Hilfe einer Arretiervorrichtung vorübergehend zu fixieren. Die Beschickungsstation gibt die Lage des Transportrostes in bestimmten Toleranzgrenzen vor, innerhalb derer der Fühldorn in jede der Halteöffnungen des Transportrostes ansatzweise eingefädelt werden kann und der Beschickungsroboter sich dann durch Nachführen des Greifers in die tatsächliche Position der Halteöffnung nachführen lässt.

Eine Weiterbildung sieht vor, dass der Transportrost wenigstens einen Unterrost und einen Oberrost aufweist. Dies ist zweckmäßig, weil nicht alle Bereiche des Transportrostes einer gleichmäßig starken Wärmebeanspruchung unterliegen. Der in der Regel stärker durch Verzug und Wachstum beanspruchte Oberrost kann im Falle eines Schadens oder bei Überschreitung bestimmter Wachstumsgrenzen ausgetauscht werden. Der bereits benutzte Unterrost kann in Verbindung mit einem neuen Oberrost weiterbenutzt werden.

Vorzugsweise ist die Unterteilung zwischen Unterrost und Oberrost so vorgesehen, dass die Aufstellnester in dem Unterrost angeordnet sind.

In Fortführung dessen sind die Halteöffnungen günstigerweise in dem Oberrost angeordnet.

Ein weiterer Nutzen ergibt sich, wenn die Aufstellnester des Unterrostes in unterschiedlicher Höhe vorgesehen sind. Die Höhendifferenz zwischen den Aufstellnestern ist so ausgelegt, dass sich die Bereiche des Werkstücks mit der größten radialen Ausdehnung, beispielsweise einem Wellenabsatz mit großem Durchmesser, nicht berühren. Aus diesem Grund orientiert sich die Höhendifferenz zwischen den Aufstellnestern daran, wie lang etwa ein entsprechender Wellenabsatz ist. In einem mit gleichen Werkstücken bestückten Transportrost sind die durchmessergrößten Wellenabsätze in zwei Ebenen angeordnet, so dass diese Wellenabsätze nicht seitlich aneinanderstoßen können. Ein weiterer Vorteil, den die etagenweise Anordnung der Werkstücke schafft, ist der bessere Platz, der zum Ansetzen des Greifers an ein Werkstück zur Verfügung steht, weil die benachbarten Werkstücke erhöht oder tieferliegend in den Aufstellnestern aufgestellt sind. Ein anderer Nachteil konnte beseitigt werden nämlich, die durch bei einem geringen seitlichen Abstand zwischen den Werkstücken langsame und ungleichmäßige Erwärmung in dem Wärmebehandlungsofen.

Besonders sicher ist das Einführen des Fühldorns in die Halteöffnungen des Transportrostes, wenn die Arretiervorrichtung Klemmfinger aufweist, die den Transportrost mittig zentrieren und halten. Durch die mittige Zentrierung liegen die nahe der Mitte des Transportrostes angeordneten Halteöffnungen und Aufstellnester nahezu in ihrer Sollposition. Je weiter eine Halteöffnung beziehungsweise ein Aufstellnest von der Mitte des Transportrostes entfernt ist, desto stärker weicht deren Istposition von der Sollposition ab. Dies, weil sich das Längenwachstum zu den Rändern des Transportrostes hin verstärkt.

Transportroste können ein derart großes Längen- und Breitenwachstum aufweisen, das einige der Halteöffnungen von dem Fühldorn nicht getroffen werden, wenn der Beschickungsroboter den Fühldorn an der Sollposition einer Halteöffnung in vertikaler Richtung absenkt. Die voreingestellte Sollposition, in der der Fühldorn an die Halteöffnung herangeführt wird kann beispielsweise soweit neben der Istposition liegen, dass der Fühldorn auf einen die Halteöffnung begrenzenden Stegring gedrückt wird. Um zu verhindern, dass Transportroste mit zu großem Längen- und Breitenwachstum oder übermäßig starkem Verzug verwendet werden, ist eine Rahmenlehre mit Grenzflächen vorgesehen, über die geprüft wird, ob sowohl das Längen- und Breitenmaß als auch die Lage des Transportrostes in der Beschickungsstation innerhalb zulässiger Abweichungen liegen. Der Beschickungsroboter versucht diese Rahmenlehre auf den Transportrost aufzulegen, wobei dann, wenn die Rahmenlehre flach auf den Transportrost passt, die Abweichungen desselben zulässig sind und Werkstücke in den Transportrost eingesetzt werden und andernfalls, wenn die Rahmenlehre nur schief oder mit einem Abstand zu dem Transportrost auf dieses passt, die Abweichungen nicht zulässig sind, und keine Werkstücke in den Transportrost eingesetzt werden. Um die Rahmenlehre flach auf den Oberrost legen zu können, muss dieser zwischen die Grenzflächen der Rahmenlehre passen.

Eine Rahmenlehre kann auch dazu ausgelegt sein zu prüfen, ob eine Istkontur des Transportrostes innerhalb vorgegebener Formabweichungen einer Sollkontur liegt.

Zweckmäßig ist der Fühldorn mit einem Kraftbegrenzer versehen, der, sobald der Fühldorn mit einer bestimmten Kraft gegen das Aufstellnest oder ein Hindernis gedrückt wird, die Bewegung des Beschickungsroboters abschaltet.

Nützlicherweise ist die Arretiervorrichtung ebenfalls mit einem Kraftbegrenzer versehen. Dieser wirkt einfacherweise wie der Kraftbegrenzer des Fühldorns.

Eine sehr einfache und kostengünstige Konstruktion einen Kraftbegrenzers sieht vor, dass dieser wenigstens eine Druckfeder und einen Initiator aufweist. Stößt der Fühldorn bzw. die Arretiervorrichtung an einem mechanischen Widerstand an, wird durch fortgesetzte Bewegung des Fühldorns bzw. der Arretiervorrichtung die Druckfeder des Kraftbegrenzers zusammengedrückt. Sobald die Druckfeder um einen bestimmten Federweg eingedrückt ist, wird der Initiator betätigt und durch ein Schaltsignal des Initiators die Bewegung des Beschickungsroboters angehalten.

Der Transportrost kann einen Grundrost aufweisen, auf welchem der Unterrost aufliegt.

Eine hilfreiche Verbesserung sieht vor, dass der Transportrost einen in zwei Unterrosthälften unterteilten Unterrost sowie einen in zwei Oberrosthälften unterteilten Oberrost aufweist, und dass die Unterrosthälften nebeneinander auf dem Grundrost liegen und die Oberrosthälften auf den Unterrosthälften angeordnet sind. Auf diese Weise wird erreicht, dass bei einer Beschädigung an einer Unterrost- oder einer Oberrosthälfte nicht der ganze Unterrost bzw. Oberrost sondern nur eine Hälfte ausgetauscht werden muss.

Um zu gewährleisten, dass die Sollpositionen, in denen der Fühldorn in eine Halteöffnung eingeführt wird, möglichst genau positioniert sind, ist eine Positionier- und Haltevorrichtung für die beiden Unterrosthälften vorgesehen, mit der die Unterroste während der Beschickung fixierbar sind.

Einfacherweise ist die Positionier- und Haltevorrichtung als Positioniergreifer ausgebildet, ist der Positioniergreifer unterhalb der Aufstellebene der Beschickungsstation angeordnet und in eine ausgefahrene Stellung bewegbar ist, in der er die Unterrosthälften greift und zur Beschickung festhält und in eine eingefahrene Stellung bewegbar, in der er unter die Aufstellebene der Beschickungsstation zurücksteht.

Vorzugsweise ist zum Einsetzen eines leeren Transportrostes in die Beschickungssstation sowie für die Entnahme eines beladenen Transportrostes aus der Beschickungssstation ein von dem Beschickungsroboter handhabbarer Transportrostheber vorgesehen.

Einfacherweise weist der Transportrostheber eine Hakenaufnahme auf und ist an dem Beschickungsroboter ein in diese Hakenaufnahme einhakbarer Aufnahmebolzen vorgesehen.

Der Transportrostheber hebt vorzugsweise den Grundrost mit dem darauf liegenden Unterrost und Oberrost. Um ein Verrutschen oder ein verlieren des Grundrostes zu verhindern weist der Transportrostheber auf einer Hebefläche angeordnete Führungsnocken auf. Zur Handhabung mittels des Beschickungsroboters steht der Grundrost auf der Hebefläche, wobei die Führungsnocken lagesichernd in den Grundrost greifen. In den Unterrost greifen zweckmäßig in gleicher Weise Führungsnocken ein, die an dem Grundrost angeordnet sind und eine Verschiebung des daraufstehenden Unterrostes verhindern.

Nachstehend ist die Erfindung in einer Zeichnung beispielhaft dargestellt und anhand der einzelnen Figuren detailliert beschrieben. Es zeigen:
- Fig. 1: die Vorderansicht eines mehrteiligen Transportrostes,
- Fig. 2: zwei nebeneinander liegende, neue Oberrosthälften, die noch kein Wachstum und keinen Wärmeverzug aufweisen,
- Fig. 3: die beiden Oberrosthälften gemäß Fig. 2 in durchgezogener Volllinie dargestellt sowie über den neuen Oberrosthälften in strichpunktierter Linie dargestellt gebrauchte Oberrosthälften, die durch Wachstum und Wärmeverzug verändert sind,
- Fig.4a: eine schematische Darstellung der Vorderansicht einer Beschickungsstation für einen Transportrost,
- Fig.4b: eine schematische Darstellung einer Seitenansicht der Beschickungsstation gemäß Fig. 4a,
- Fig. 5: eine Draufsicht auf eine Rahmenlehre,
- Fig. 6: einen Transportrost ausschnittsweise sowie einen Greifer, der einen Fühldorn in den Transportrost einsetzt,
- Fig. 7: einen voll beschickten Transportrost,
- Fig. 8: eine Draufsicht auf einen in einer Beschickungsstation angeordneten Transportrost sowie eine Positionier- und Halteeinrichtung für die beiden Unterrosthälften des Transportrostes,
- Fig. 9: eine Seitenansicht auf die Positionier- und Halteeinrichtung gemäß Fig. 8,
- Fig.10: einen Transportrostheber, mit dem der Beschickungsroboter den Transportrost auf der Beschickungsstation absetzen und herunterheben kann,
- Fig.11: eine Seitenansicht des Transportrosthebers,
- Fig.12: einen Endeffektor des Beschickungsroboters, der sowohl mit einer Einhakvorrichtung für den Transportrostheber als auch mit einem Parallelgreifer zur Handhabung des Fühldorns, der Rahmenlehre sowie zum Greifen der Werkstücke ausgestattet ist.

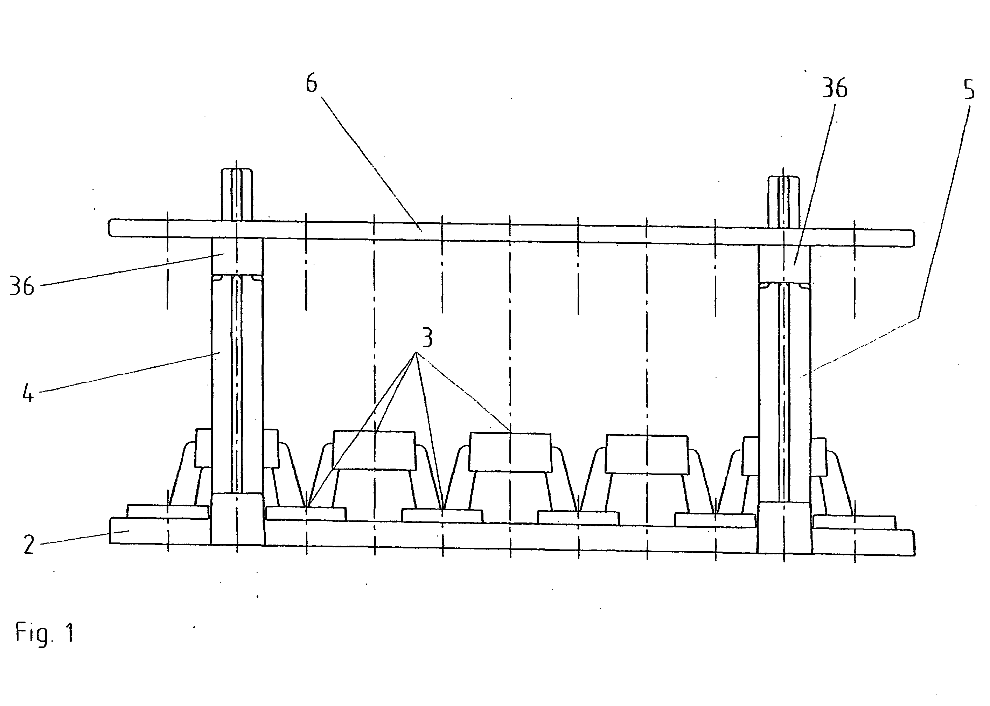

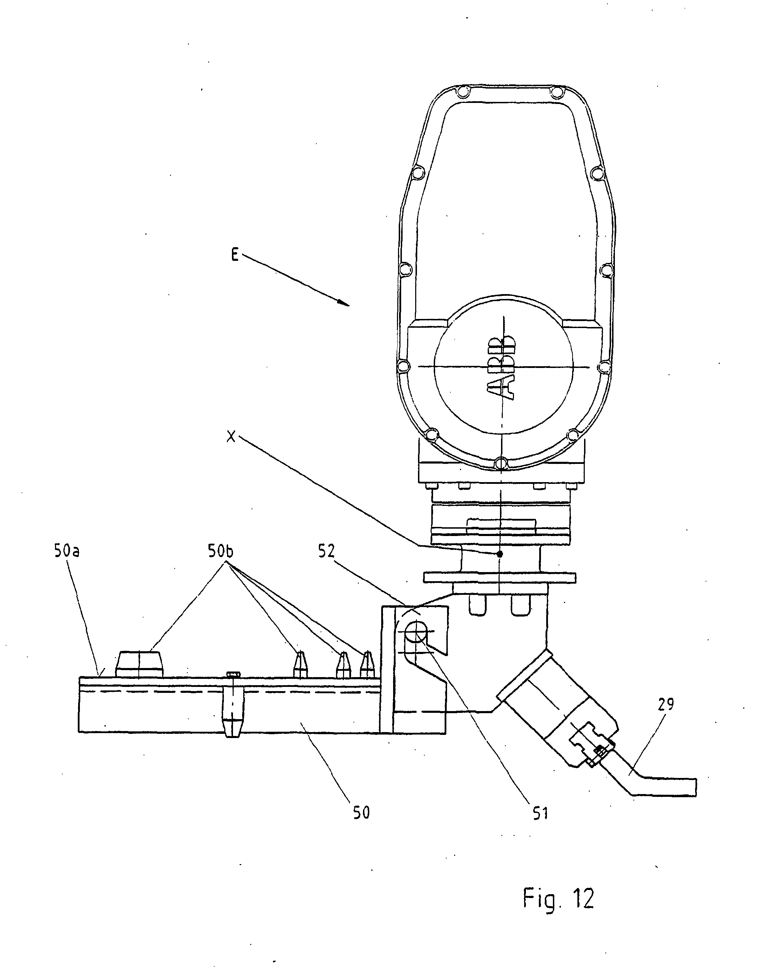

In Fig. 1 ist zunächst ein mehrteiliger Transportrost 1 in der Vorderansicht dargestellt. Zur automatischen Beschickung des Transportrostes weist die vorgeschlagene Vorrichtung einen Beschickungsroboter B mit einem Greifer auf. Der Beschickungsroboter B ist in der Zeichnung einfacherweise nur in Ausschnitten dargestellt. Im wesentlichen ist in Fig. 12 ein Ausschnitt des Beschickungsroboter B dargestellt, der einen sogenannten Endefektor E zeigt. An dem Endeffektor E ist unter anderem ein Greifer angeordnet.

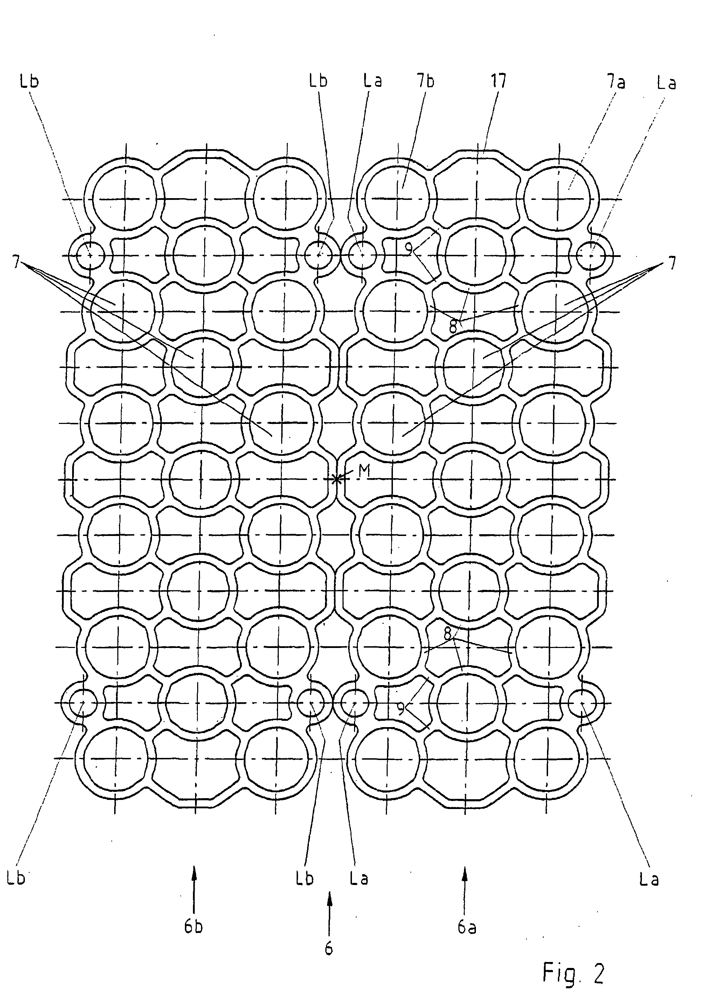

Nach Fig. 1 besteht der Transportrost 1 aus einem Unterrost 2 mit Aufstellnestern 3, an dem Unterrost 2 angebrachten Auflagestützen, von denen in der Vorderansicht nur die Auflagestützen 4 und 5 sichtbar sind, sowie einem auf den Auflagestützen 4 und 5 lose aufliegenden Oberrost 6. Der Oberrost 6 ist in Fig. 2 separat gezeichnet. In dieser Darstellung sind die Halteöffnungen 7 am besten erkennbar. Die Sollposition einer Halteöffnung 7 liegt im zusammengefügten Zustand des Transportrostes jeweils fluchtend über einem der Aufstellnester 3 des Unterrostes 2. Wegen Wärmeverzugs weichen einander zugeordnete Aufstellnester und Halteöffnungen jedoch aus der fluchtenden Sollposition ab.

Bei der beschriebenen Ausführungsform des Transportrostes 1 ist sowohl der Unterrost 2 als auch der Oberrost 6 in je zwei Unterrosthälften 2a und 2b sowie je zwei Oberrosthälften 6a und 6b unterteilt. Jede Unterrosthälfte 2a beziehungsweise 2b ist mit vier Auflagestützen versehen, die von der Aufstandsfläche der Unterrosthälfte vertikal nach oben hervorstehen. Auf den vier Auflagestützen einer Unterrosthälfte 2a beziehungsweise 2b liegt je eine der Oberrosthälften 6a beziehungsweise 6b auf. Am besten ist in Fig. 2 erkennbar wie die beiden Oberrosthälften 6a und 6b einander zugeordnet sind. Jede der Oberrosthälften 6a und 6b weist siebzehn etwa runde Halteöffnungen für die aufzunehmenden Werkstücke auf. Das gleiche gilt für die Anzahl der Aufstellnester des Unterrostes 2. Somit können in einem Transportrost 1 insgesamt vierunddreißig einzelne Werkstücke aufgenommen werden. Jede Halteöffnung 7 ist durch einen Stegring 8 begrenzt. Die Stegringe 8 benachbarter Halteöffnungen 7 sind untereinander durch Verbindungstege 9 gehalten.

Des weiteren ist jede Oberrosthälfte 6a beziehungsweise 6b gemäß Fig. 2 mit vier Lageröffnungen Lₐ beziehungsweise L_{b} versehen. Die Lageröffnungen Lₐ beziehungsweise L_{b} sind, wie die Halteöffnungen 7, von Stegringen begrenzt.

Die Oberrosthälfte 6a wird mit ihren Lageröffnungen Lₐ auf die Auflagestützen der Unterrosthälfte 2a aufgesetzt. Gleichermaßen wird mit den Lageröffnungen L_{b} der Oberrosthälfte 6b und den Auflagestützen der Unterrosthälfte 2b verfahren.

Jede Oberrosthälfte 6a beziehungsweise 6b liegt lose auf den Auflagestützen einer Unterrosthälfte auf. Zwischen den Auflagestützen und den Lageröffnungen Lₐ beziehungsweise L_{b} ist reichlich seitliches Spiel vorgesehen. Das seitliche Spiel ist erforderlich, damit sich eine Oberrosthälfte auch dann auf die Auflagestützen einer Unterrosthälfte legen läßt, wenn bereits mehrmalig der Wärmebehandlungsofens durchlaufen wurde und die Transportrostteile gewachsen und/oder verzogen sind.

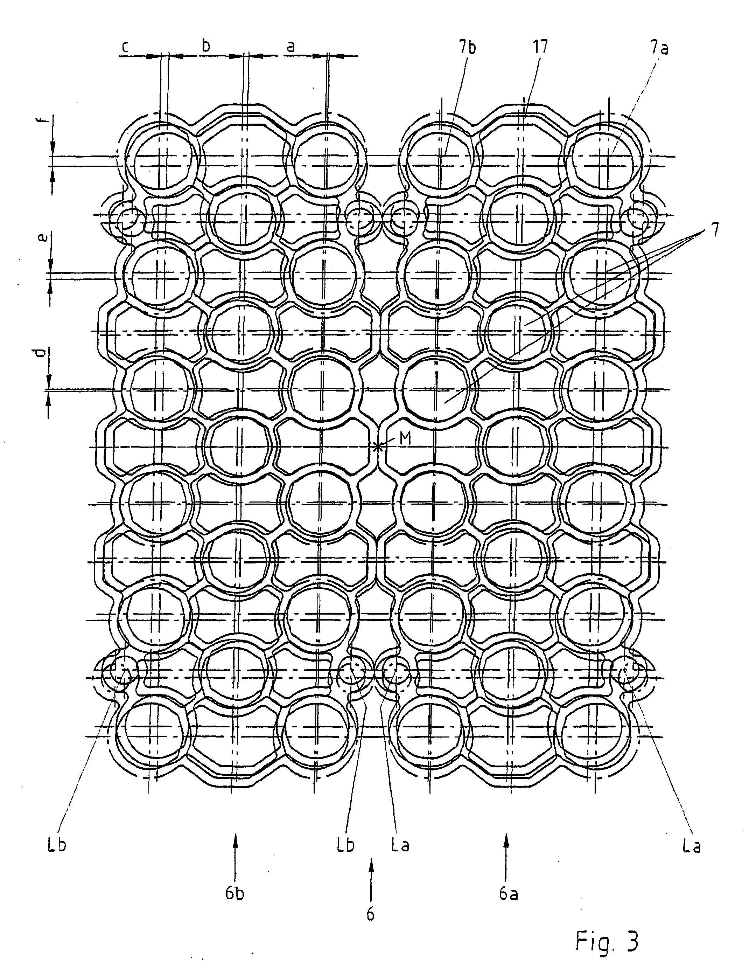

In Fig. 3 sind zwei Zustände des aus den Oberrosthälften 6a und 6b zusammengesetzten Oberrostes 6 dargestellt. Der ursprüngliche Oberrost 6 ist mit durchgezogener Vollinie und der Oberrost im gewachsenen Zustand als strichpunktierte Linie dargestellt. In beiden Zuständen sind die Oberroste 6 in dem Flächenmittelpunkt M zentriert. Von dem Flächenmittelpunkt M aus betrachtet weisen die nächstgelegenen Halteöffnungen 7 des gewachsenen Oberrostes 6 nur eine geringe Lageabweichung zu den Halteöffnungen 7 des ursprünglichen Oberrostes 6 auf. Mit steigendem Abstand von dem Flächenmittelpunkt M vergrößert sich die Lageabweichung zwischen den ursprünglichen Halteöffnungen 7 und den Halteöffnungen 7 im gewachsenen Zustand des Oberrostes. Mit den in Fig. 3 eingetragenen Maßvariablen a,b, c sowie d, e, f ist verdeutlicht, wie die Lageabweichung einer Halteöffnung mit zunehmendem radialen Abstand von dem Flächenmittelpunkt M anwächst. Bei einer ungefähren Länge des Oberrostes 6 von 500 Millimeter können während seiner Lebensdauer Längenzuwächse von mehr als 15 Millimeter auftreten. Bei einer Breite von etwa 400 Millimeter können Zuwächse von 10 Millimeter vorkommen.

Außer dem Wachstum und dem Verzug können an den Stegringen 8 der Halteöffnungen 7 oder an den die Stegringe haltenden Verbindungsstegen 9 Brüche auftreten. Es kommt beispielsweise vor, dass von den Bruchenden des Bruchs eines Stegrings 8 ein Stück zur Mitte des Stegrings 8 hervorsteht und die Halteöffnung 7 versperrt. In diesem Fall kann kein Werkstück mehr in diese Halteöffnung 7 eingesetzt werden. Auch die Aufstellnester 3 des Unterrosts 2 können solche Beschädigungen aufweisen und unbrauchbar werden. Derart zerstörte Transportrostteile müssen sofort ausgesondert werden.

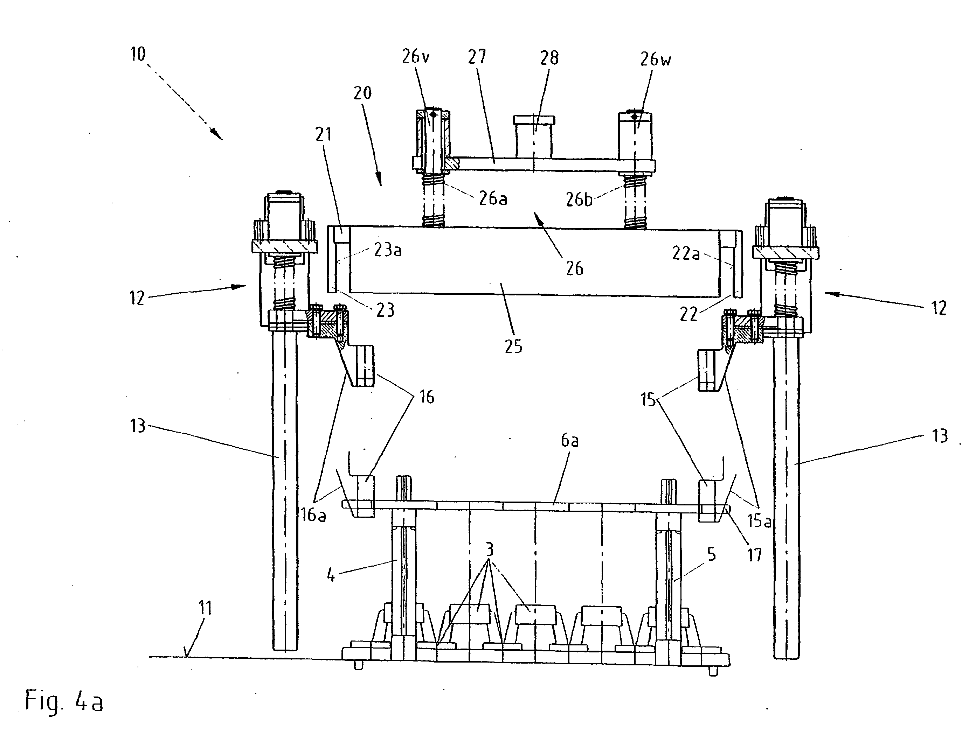

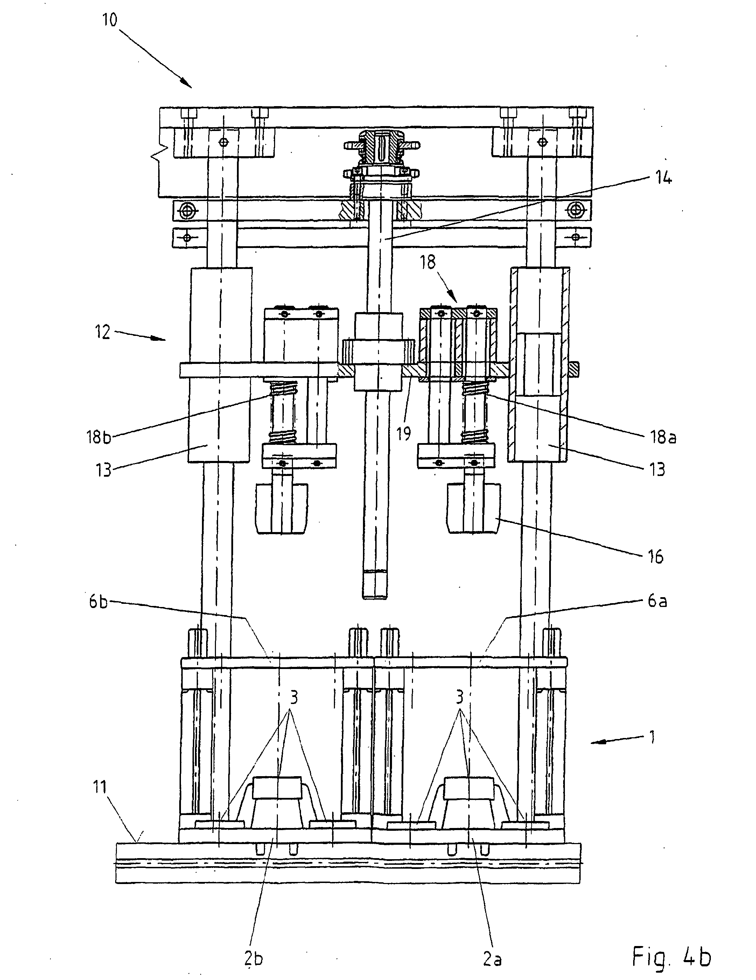

In den Figuren 4a und 4b ist eine Beschickungsstation 10 zur automatischen Beschickung des beschriebenen mehrteiligen Transportrostes 1 schematisch dargestellt. In diese Beschickungsstation 10 muss ein Transportrost 1 eingesetzt werden, damit der Beschickungsroboter B dieses in einer vordefinierten Lage beschicken kann.

Fig. 4a zeigt eine Vorderansicht und Fig. 4b eine Seitenansicht der Beschickungsstation 10. Gemäß dieser beiden Darstellungen ist ein Transportrost 1 in einer Aufstellebene 11 der Beschickungsstation 10 angeordnet. Es ist eine Arretiervorrichtung 12 dargestellt, mit der der Transportrost 1 zur Beschickung derart auf die Aufstellebene 11 gedrückt wird, dass sich weder die Position der Aufstellnester 3 des Unterrostes 2 noch die Position der Halteöffnungen 7 des Oberrostes 6 verändern kann. Die Arretiervorrichtung 12 ist mit einer Führung 13 für eine Vertikalbewegung sowie mit einer Antriebseinrichtung 14 für die Vertikalbewegung versehen. Zur Arretierung sind Klemmfinger 15 und 16 vorgesehen, von denen je einer an jeder kurzen Seite einer Oberrosthälfte 6a und 6b angreift. Jeder Klemmfinger 15 und 16 ist mit einer Zentrierschräge 15a beziehungsweise 16a versehen. Die Zentrierschräge 15a wirkt mit einem besonderen Außensteg 17 zusammen, der an jeder der kurzen Seiten der Oberrosthälften 6a und 6b vorgesehen ist. Der Außensteg 17 ist am besten in Fig. 2 zu erkennen. Dort verbindet er die an den Ecken der einer kurzen Seite der Oberrosthälfte 6a vorgesehenen Halteöffnungen 7a und 7b. Dann, wenn die Oberrosthälfte 6a mehr in Richtung des Klemmfingers 16 auf der Unterrosthälfte aufliegt, weist dieser Klemmfinger zunächst etwas Luft zu dem Außensteg 17 der Oberrosthälfte 6a auf. Der gegenüberliegende Klemmfinger 15 kommt in diesem Fall eher mit dem zugeorteten Außensteg 17 der Oberrosthälfte in Kontakt. Eine Absenkbewegung der Klemmfinger bewirkt, dass das Oberrost seitlich verschoben wird, weil der Außensteg 17 an der Zentrierschräge 15a des Klemmfingers 15 entlang gleitet. Die vertikale Bewegung des Klemmfingers 15 wird über die Zentrierschräge 15a und den Außensteg 17 der Oberrosthälfte 6a in eine horizontale Zentrierbewegung der Oberrosthälfte 6a umgesetzt. Die seitliche Verschiebung der Oberrosthälfte 6a endet, sobald das Spiel zwischen dem gegenüberliegenden Klemmfinger 16 und dessen zugeortetem Außensteg auf Null geschrumpft ist und die Zentrierschräge 16a des Klemmfingers 16 mit dem zugeordneten Außensteg in Kontakt steht. In diesem Stadium wird die von der Arretiervorrichtung 12 auf den Transportrost 1 ausgeübte Kraft weiter erhöht, bis ein Kraftbegrenzer 18 die Absenkbewegung der Arretiervorrichtung 12 stoppt.

Die Klemmfinger 15 und 16 bilden selbst einen Teil des Kraftbegrenzers 18. Sie sind zu diesem Zweck vertikal beweglich an der Arretiervorrichtung 12 aufgehängt, wobei zwei Druckfedern 18a und 18b je einen Klemmfinger 16 gegen ein Widerlager 19 abstützen. Sobald der Klemmfinger 16 beim Absenken der Arretiervorrichtung 12 an dem Außensteg 17 einer Oberrosthälfte 6a anstößt, werden bei einer fortgesetzten Absenkung der Arretiervorrichtung 12 die Druckfedern 18a und 18b zusammengedrückt. Bei einem bestimmten Einfederweg der Druckfedern 18a und 18b wird ein Initiator (nicht dargestellt) der Arretiervorrichtung 12 betätigt, der ein Stopsignal für die Antriebseinrichtung 14 liefert. Die Lage der Oberrosthälften 6a und 6b ist in diesem Zustand hinreichend genau zentriert, so dass der Beschickungsroboter B die Sollpositionen der Halteöffnungen 7 der Oberrosthälften 6a und 6b anfahren kann, um die exakten Istpositionen mit Hilfe eines speziellen Fühldorns F zu ertasten.

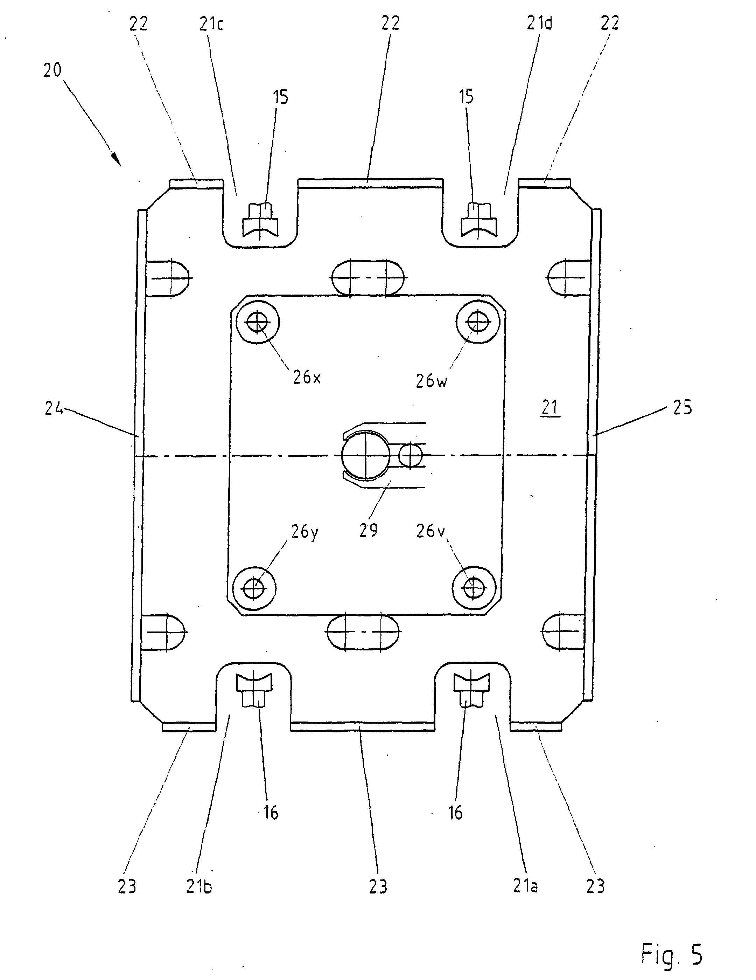

Weiterhin ist in Fig. 4a eine Rahmenlehre 20 dargestellt, von der in Fig. 5 eine Draufsicht zu sehen ist. Die Rahmenlehre 20 kann optional vorgesehen sein, um die Lage des Transportrostes 1 in der Beschickungsstation 10 zu prüfen. Außerdem kann mit der Rahmenlehre 20 festgestellt werden, ob ein in Länge und Breite gewachsener Oberrost 6 noch innerhalb zulässiger Toleranzen liegt. Die Rahmenlehre 20 ist im wesentlichen aus einer Grundplatte 21 gebildet, an deren Rändern plattenförmige Schürzen 22 und 23 sowie 24 und 25 angebracht sind. Die einander zugekehrten Innenflächen der Schürzen 22 und 23 bilden Grenzflächen, zwischen welche der Oberrost 6 der Länge nach passen muss. Die einander zugekehrten Innenflächen der Schürzen 24 und 25 bilden Grenzflächen, zwischen welche der Oberrost 6 der Breite nach passen muss. Ist das Längenund/oder Breitenmaß des Oberrostes 6 größer als der Abstand der gegenüberliegenden Grenzflächen 22 und 23 beziehungsweise 24 und 25 der Rahmenlehre 20, so kann die Rahmenlehre 20 nicht flach auf den Oberrost 6 aufgelegt werden. Dies wird von dem Positionsmeßsystem des Beschickungsroboters erkannt und daraufhin dieses Oberrost 6 aussortiert.

Ein Transportrost 1 wird dann ebenfalls nicht beschickt, wenn er beispielsweise um eine senkrechte zur Aufstellebene 11 der Beschickungsstation 10 gelegene Achse gedreht auf der Aufstellebene 11 steht. Bei einer solchen Schieflage kann die Rahmenlehre 20 ebenfalls nicht so auf den Transportrost 1 aufgelegt werden, dass der Oberrost 6 zwischen die Grenzflächen 22a und 23a sowie die Innenflächen der Schürzen 24 und 25 passt.

Auch die Rahmenlehre 20 ist mit einem Kraftbegrenzer 26 versehen. Die Grundplatte 21 ist über Führungsstangen 26v, 26w, 26x und 26y des Kraftbegrenzers 26 an einem Trägerelement 27 aufgehängt. Der Kraftbegrenzer 26 weist vier an den Führungsstangen 26v, 26w, 26x und 26y angeordnete Druckfedern auf, von denen in Fig. 4a vereinfacht nur die Druckfedern 26a und 26b dargestellt sind. An dem Trägerelement 27 ist ein Hebebolzen 28 angebracht, an der als Parallelgreifer ausgebildete Greifer 29 des Beschickungsroboters B die Rahmenlehre 20 handhaben kann. Der Greifer 29 des Beschickungsroboters B fasst die Rahmenlehre 20 an dem Hebebolzen 28 und legt sie flach auf den Oberrost 6 auf. Sobald die Grundplatte 21 der Rahmenlehre 20 auf dem Oberrost 6 aufliegt, werden durch eine weiter Absenkbewegung des Beschickungsroboters B die Druckfedern 26a und 26b des Kraftbegrenzers 26 zusammengedrückt und bei einem bestimmten Einfederweg ein Initiator (nicht dargestellt) betätigt. Der Initiator liefert dann ein Signal zur Abschaltung der Absenkbewegung des Beschickungsroboters B.

Die Grundplatte 21 der Rahmenlehre 20 weist Aussparungen 21a, 21b, 21c und 21d für die Klemmfinger 15 und 16 der Arretiervorrichtung 12 auf. Auf diese Weise können während des Einsatzes der Rahmenlehre 20 auch die Klemmfinger 15 und 16 der Arretiervorrichtung 12 auf den Oberrost 6 abgesenkt werden. Die Überprüfung der Abmessungen und Lage des Transportrostes 1 findet statt, sobald die Klemmfinger 15 und 16 der Arretiervorrichtung 12 den Oberrost 6 vorjustiert und fixiert haben. Alternativ kann auch zuerst die Lageprüfung mit der Rahmenlehre 20 durchgeführt werden, bevor die Arretiervorrichtung 12 den Transportrost 1 auf der Aufstellebene 11 ausrichtet und fixiert.

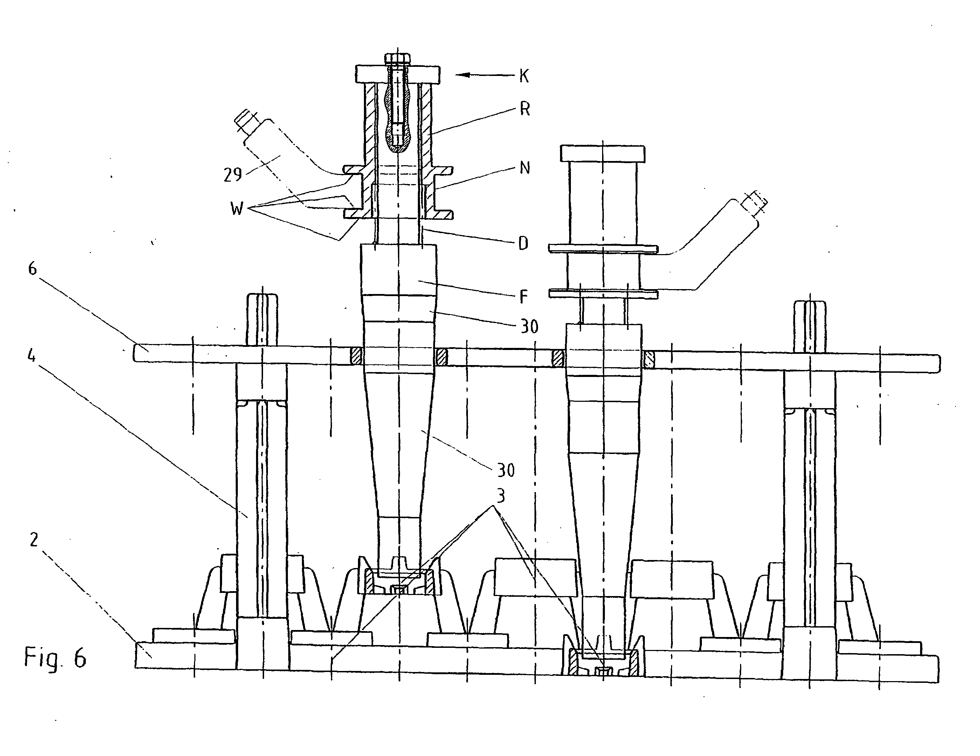

Der folgende Verfahrensschritt ist anhand der Fig. 6 erläutert. Hierbei wird mit dem als Parallelgreifer ausgebildeten Trägerelenient 27 des Beschickungsroboters B der spezielle Fühldorn F in vertikaler Lage über die in einer Steuerelektronik des Beschickungsroboters B gespeicherte Sollposition einer Halteöffnung 7 des Transportrostes 1 gefahren. Der Fühldorn F weist einen Zentrierkonus 30 auf, an dessen dünnem Ende der Fühldorn F mit seitlichem Spiel in die Halteöffnung 7 eingetaucht wird. Bei diesem Vorgang hält der Beschickungsroboter B den Fühldorn F lagegetreu in vertikaler Ausrichtung fest. Die übrigen Bewegungsachsen des Beschickungsroboters B werden nachgiebig gestellt, so dass der Beschickungsroboter B während der Eintauchbewegung des Fühldorns F selbsttätig in die Istposition der Halteöffnung 7 nachgeführt wird. Die Bewegungsachsen des Beschickungsroboters B werden derart nachgiebig eingestellt, dass zwar keine Senkbewegung durch das Eigengewicht des Beschickungsroboters B und des Greifers 27 möglich ist, jedoch bereits geringe Seitenkräfte, die der Zentrierkonus 30 durch Kontakt mit dem Stegring 8 einer Halteöffnung 7 erfährt, zum seitlichen Nachführen des Beschickungsroboters B genügen. Die gefundene Istposition der Halteöffnung 7 wird in der Steuerelektronik des Beschickungsroboters B gespeichert. In dem vorliegenden Ausführungsbeispiel taucht der Beschickungsroboter B den Fühldorn F zunächst in jede der vierunddreißig Halteöffnungen des Transportrostes 1 ein und speichert die Istposition der jeweiligen Halteöffnung 7 in einem Zwischenspeicher der Steuerelektronik ab. Nach diesem Verfahrensschritt wird der Fühldorn F abgelegt und die Werkstücke nacheinander gegriffen und jeweils ein Werkstück an einer der gespeicherten Istpositionen der Halteöffnungen in den Transportrost 1 eingesetzt. Der Zentrierkonus 30 des Fühldorns F ist so ausgelegt, dass seine dünne Seite immer sicher an eine Halteöffnung 7 angesetzt werden kann, egal ob diese in der Sollposition liegt oder durch erhebliches Längenwachstum eine deutliche Lageabweichung zu der Sollposition erfahren hat. Trotzdem ist der Fühldorn F sicherheitshalber mit einem Kraftbegrenzer K versehen, der, sobald der Fühldorn mit einer bestimmten Kraft gegen ein Aufstellnest 3 oder ein Hindernis gedrückt wird, die Bewegung des Beschickungsroboters B abschaltet. Der Kraftbegrenzer K weist ein Führungsstück R auf, in dem der Fühldorn F geradgeführt ist. Der Fühldorn F ist über eine Druckfeder D an dem einer Widerlagerfläche W des Führungsstücks abgestützt. Wenn der Fühldorn an einem Gegenstand anstößt, wird er in dem geraden Führungsstück R verschoben und die Druckfeder D zusammengedrückt. Bei einem bestimmten Einfederweg der Druckfeder D wird ein Initiator betätigt, der ein Stopsignal für die Steuerelektronik des Beschickungsroboter B liefert und diesen anhalten lässt. Das Führungsstück R weist außerdem eine Ringnut N auf, die dem Greifer 29 des Beschickungsroboters B als Greifbereich dient. Die Ringnut N ist so bemessen, das der Greifer 29 mit geringem seitlichen Spiel zwischen die Widerlagerfläden W der Ringnut N passt. So ist gewährleistet, dass der Fühldorn F nicht aus der vertikalen Lage kippen kann, wenn er von dem Beschickungsroboter B beispielsweise gegen einen Stegring 8 des Oberrostes 6 geführt wird.

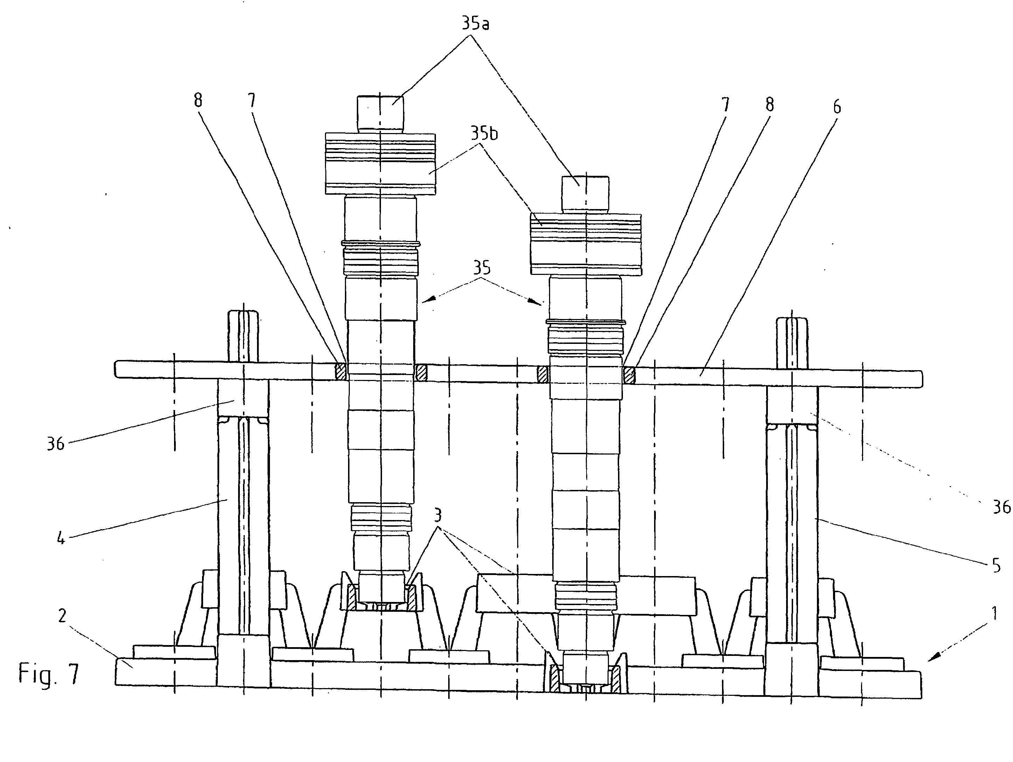

Ein beschickter Transportrost 1 ist in Fig. 7 dargestellt. Der Transportrost 1 ist mit Getriebewellen 35 beladen. Die Getriebewellen 35 weisen an ihrem von dem Transportrost hervorstehenden Ende 35a denjenigen Wellenabsatz 35b mit dem größten Durchmesser auf. Einander benachbarte Aufstellnester 3 des Transportrostes 1 sind in zwei unterschiedlichen Ebenen angeordnet, so dass die Getriebewellen 35 unterschiedlich hoch hervorstehen. Dadurch ist gewährleistet, dass die durchmesserstärksten Wellenabsätze 35b nicht auf gleicher Höhe nebeneinander liegen und durch Kontakt miteinander beschädigt werden können.

In Fig. 7 ist ein weiteres Detail des Transportrostes 1 erkennbar. Gemeint sind auf die Auflagestützen 4 und 5 aufgesteckte Distanzhülsen 36, mit denen der Abstand zwischen den Aufstellnestern 3 des Unterrostes 2 und den Halteöffnungen 7 des Oberrostes 6 variiert werden kann. Die Distanzhülsen 36 sind lose auf die Auflagestützen 4 und 5 aufgesteckt. Der Oberrost 6 lagert auf den Distanzhülsen 36 und ist durch die Auflagestützen 4 und 5 gegen seitliches Verrutschen gesichert. Die Aufstellnester 3 sind in Fig. 7 trichterförmig ausgebildet, damit das Aufstellende der Getriebewelle 35 sich selbsttätig darin zentriert. Bei den Auflagestützen 4 und 5 handelt es sich um gegossene Teile, die mit dem Unterrost 2 durch Schweißen fest verbunden sind.

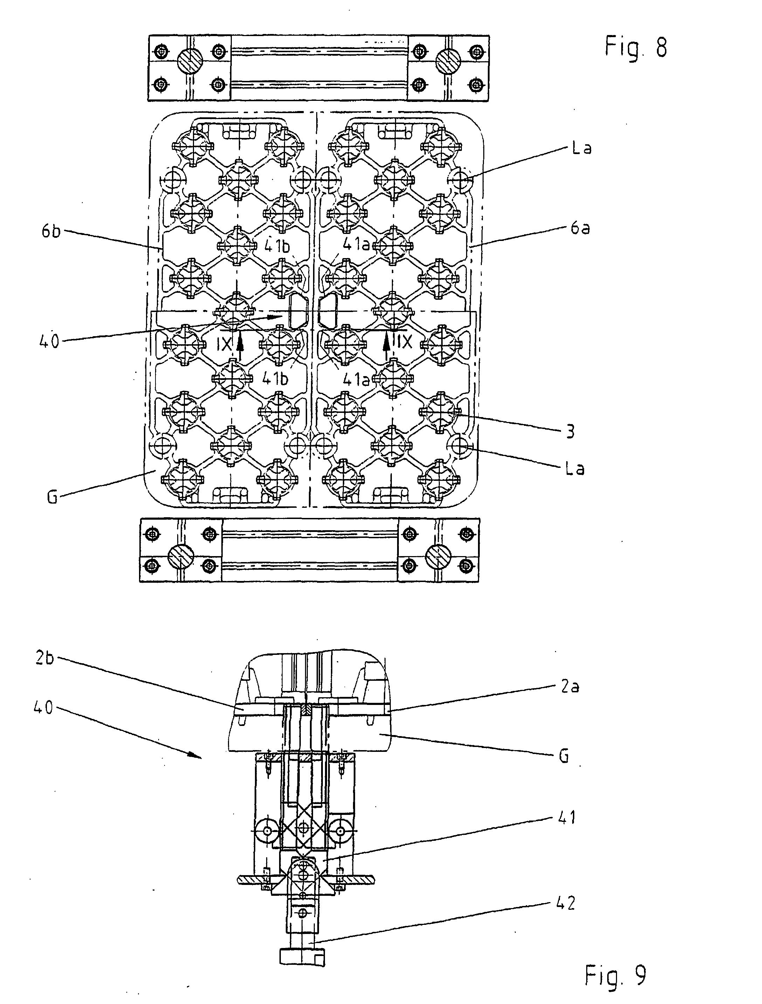

In Fig. 8 ist ein auf der Aufstellebene 11 der Beschickungsstation 10 angeordneter Transportrost 1 eingezeichnet, der aus einem Grundrost G, zwei Unterrosthälften 2a und 2b sowie zwei Oberrosthälften 6a und 6b besteht. Von dem Transportrost sind zwei Halbschnitte dargestellt. Der eine Halbschnitt zeigt den Transportrost im ursprünglichen Zustand. Der andere Halbschnitt stellt einen gewachsenen Zustand des Transportrostes dar. Zur Vorjustierung vor dem Einsatz des Beschickungsroboters B ist eine Positionier- und Haltevorrichtung 40 für die beiden Unterrosthälften 2a und 2b vorgesehen. Diese kommt zum Einsatz, bevor die Rahmenlehre 20 die Lage des Transportrostes 1 sowie die Abmessungen des Oberrostes 6 prüft und in dem darauf folgenden Verfahrensschritt der Beschickungsroboter B mittels des Fühldorns F die Istposition der Halteöffnungen 7 abtastet.

Die Positionier- und Haltevorrichtung 40 ist als Positionier-greifer 41 ausgebildet, der die beiden im Bereich des Flächenmittelpunkts M des Unterrostes 2 vorgesehenen parallelen Stege 2c und 2d je einer Unterrosthälfte 2a beziehungsweise 2b gegeneinander drückt. Die Justage der beiden Unterrosthälften 2a und 2b sowohl in der Aufstellebene als auch in der zur Kraftrichtung des Positioniergreifers 41 senkrechten Richtung wird durch seitliche Führungsflächen 41a und 41b der Greifbacken des Positioniergreifers 41 bewirkt. Mit diesen Führungsflächen 41a und 41b wird die Lage zweier Verbindungsstege 2e und 2f zentriert. Der Greifer 41 der Positionier- und Haltevorrichtung 40 kann senkrecht zur Aufstellebene 11 der Beschickungsstation 10 ausgefahren werden, wenn die Unterrosthälften 2a und 2b positioniert und gehalten werden müssen. Für die Entnahme des Transportrostes 1 wird der Greifer 41 in eine unterhalb der Aufstellebene 11 liegende Ruheposition eingefahren. Dies wird bei der vorliegenden Ausführungsform durch einen positionsgenauen Spindelantrieb 42 gelöst.

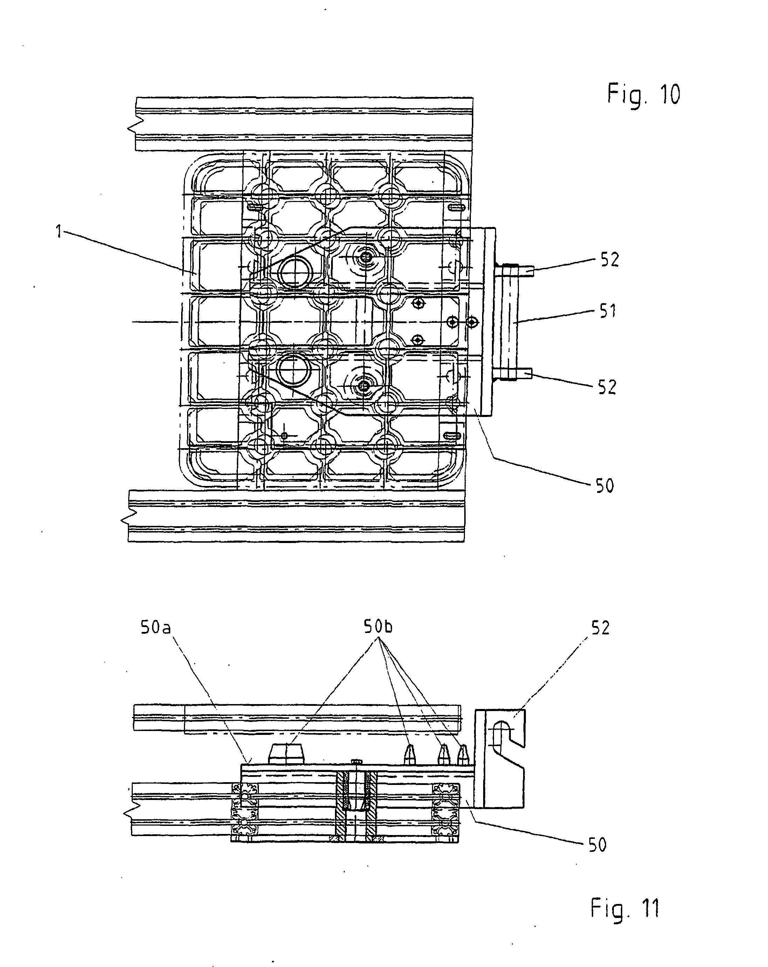

In Fig. 10 ist die Draufsicht auf ein auf der Aufstellebene 11 der Beschickungsstation 10 stehenden Transportrost 1 dargestellt. An der Unterseite des Transportrostes 1 greift ein Transportrostheber 50 an, der von dem Beschickungsroboter B handhabbar ist und eine Hebefläche 50a aufweist. Mit Hilfe des Transportrosthebers 50 setzt der Beschickungsroboter B einen leeren Transportrost 1 in der Aufstellebene 11 der Beschickungsstation 10 ab und entnimmt diesen Transportrost 1, sobald er mit den für die Wärmebehandlung vorgesehenen Werkstücken beschickt ist.

In Fig. 11 ist eine Seitenansicht des Endeffektors E des Beschickungsroboters B sowie des Transportrosthebers 50 dargestellt. Zur Verbindung des Transportrosthebers 50 mit dem Beschickungsroboters B weist dessen Endeffektor E einen Aufnahmebolzen 51 auf und ist der Transportrostheber 50 mit einer Hakenaufnahme 52 versehen. Der Aufnahmebolzen 51 des Endeeffektors E ist in die Hakenaufnahme 52 einhakbar.

Anhand der Fig. 12 ist darüber hinaus zu erkennen, dass der Endeffektor E sowohl einen Parallelgreifer 29 als auch den Aufnahmebolzen 51 für den Transportrostheber 50 aufweist. Je nachdem, welches Handhabungsinstrument gerade benötigt wird, kann der Endeffektor E die Einheit aus Aufnahmebolzen 51 und Parallelgreifer 29 um eine Achse X schwenken, um entweder den Parallelgreifer 29 oder den Aufnahmebolzen 51 anzusetzen.

In den Fig. 11 und 12 sind von der Hebefläche 50a des Transportrosthebers 50 hervorstehenden Führungsnocken 50b dargestellt, die ein Verrutschen des Transportrostes 1 während der Handhabung durch den Beschickungsroboter B verhindern.

### Bezugzeichenliste

- 1: Transportrost
- 2: Unterrost
- 2a: Unterrosthälfte
- 2b: Unterrosthälfte
- 2c: Steg
- 2d: Steg
- 2e: Verbindungssteg
- 2f: Verbindungssteg
- 3: Aufstellnest
- 4: Auflagestütze
- 5: Auflagestütze
- 6: Oberrost
- 6a: Oberrosthälfte
- 6b: Oberrosthälfte
- 7: Halteöffnung
- 7a: Halteöffnung
- 7b: Halteöffnung
- 8: Stegring
- 9: Verbindungssteg
- 10: Beschickungsstation
- 11: Aufstellebene
- 12: Arretiervorrichtung
- 13: Führung
- 14: Antriebseinrichtung
- 15: Klemmfinger
- 15a: Zentrierschräge
- 16: Klemmfinger
- 16a: Zentrierschräge
- 17: Außensteg
- 18: Kraftbegrenzer
- 18a: Druckfeder
- 18b: Druckfeder
- 19: Widerlager
- 20: Rahmenlehre
- 21: Grundplatte
- 21a: Aussparung
- 21b: Aussparung
- 21c: Aussparung
- 21d: Aussparung
- 22: Schürze
- 22a: Grenzfläche
- 23: Schürze
- 23a: Grenzfläche
- 24: Schürze
- 25: Schürze
- 26: Kraftbegrenzer
- 26a: Druckfeder
- 26b: Druckfeder
- 26v: Führungsstange
- 26w: Führungsstange
- 26x: Führungsstange
- 26y: Führungsstange
- 27: Trägerelement
- 28: Hebelbolzen
- 29: Greifer
- 30: Zentrierkonus
- 35: Getriebewelle
- 35a: hervorstehendes Ende
- 35b: Wellenabsatz
- 36: Distanzhülse
- 40: Positionier- und Haltevorrichtung
- 41: Positioniergreifer
- 41a: Führungsfläche
- 41b: Führungsfläche
- 42: Spindelantrieb
- 50: Transportrostheber
- 50a: Hebefläche
- 50b: Führungsnocke
- 51: Aufnahmebolzen
- 52: Hakenaufnahme
- B: Beschickungsroboter
- D: Druckfeder
- E: Endeffektor
- F: Fühldorn
- G: Grundrost
- K: Kraftbegrenzer
- La: Lageröffnung
- Lb: Lageröffnung
- M: Flächenmittelpunkt
- N: Ringnut
- R: Führungsstück
- W: Widerlagerfläche
- X: Achse

## Patentansprüche

1. Verfahren zum Einsetzen länglicher Werkstücke aus Stahl in einen Transportrost (1), der zur Wärmebehandlung der Werkstücke gemeinsam mit diesen durch einen Wärmebehandlungsofen gefördert werden muss, wobei
- der Transportrost (1) mit Aufstellnestern (3) für die Werkstücke und in einem Abstand über den Aufstellnestern (3) mit Halteöffnungen (7) versehen ist, wobei die Werkstücke durch die Halteöffnungen (7) hindurchgesteckt und im eingesteckten Zustand von den Halteöffnungen (7) seitlich auf Abstand gehalten werden,
- die Sollposition jeder Halteöffnung (7) in vertikaler Flucht über einem Aufstellnest (3) liegt, jedoch die Istposition jeder Halteöffnung (7) aus der vertikalen Flucht abweichen kann, **dadurch gekennzeichnet, dass** ein Beschickungsroboter (B) vorgesehen ist, dessen Wege und Bewegungswinkel mit einem Positionsmesssystem gemessen und an eine Steuerelektronik weitergeleitet werden,
- dass der Beschickungsroboter (B) einen Fühldorn (F) in vertikaler Lage über eine gespeicherte Sollposition einer Halteöffnung (7) des Transportrostes (1) bewegt,
- dass das freie der Halteöffnung (7) zugekehrte Ende des Fühldorns (F) einen Zentrierkonus (30) aufweist,
- dass der Zentrierkonus (30) mit seitlichem Spiel in die Halteöffnung (7) eingetaucht wird, wobei der Beschickungsroboter (B) den Fühldorn (F) lagegetreu in vertikaler Ausrichtung festhält,
- dass die übrigen Bewegungsachsen des Beschickungsroboters (B) derart nachgiebig gestellt werden,
- dass der Beschickungsroboter (B) während der Eintauchbewegung des Fühldorns (F) selbsttätig in die Istposition der Halteöffnung (7) nachgeführt wird,
- dass der Beschickungsroboter (B) die gefundene Istposition der Halteöffnung (7) speichert,
- dass der Beschickungsroboter (B) ein Werkstück greift und in die gespeicherte Istposition der Halteöffnung (7) bewegt, und
- dass das Werkstück dann durch die Halteöffnung (7) hindurchgesteckt und in dem Aufstellnest (3) des Transportrostes (1) aufgestellt wird.

2. Verfahren nach Anspruch 1, **dadurch gekennzeichnet, dass** der Beschickungsroboter (B) den Fühldorn (F) zunächst in jede der Halteöffnungen (7) des Transportrostes (1) eintaucht und dabei die Istposition der jeweiligen Halteöffnung (7) zwischengespeichert wird, und dass der Beschickungsroboter (B) dann die Werkstücke nacheinander greift und jeweils ein Werkstück an einer der gespeicherten Istpositionen in den Transportrost (1) einsetzt.

3. Verfahren nach Anspruch 1 oder 2, **dadurch gekennzeichnet, dass** der Fühldorn (F) während des Eintauchens in eine Halteöffnung (7) des Transportrostes (1) bis auf den Grund des Aufstellnestes (3) des Transportrostes (1) bewegt wird, und dass die in dem Aufstellnest (3) erreichte Tiefenposition des Fühldorns (F) gespeichert wird.

4. Verfahren nach einem der Ansprüche 1 bis 3, **dadurch gekennzeichnet, dass** dann, wenn ein Fühldorn (F) nicht in eine Halteöffnung (7) einsteckbar war oder die Einstecktiefe ein bestimmtes Tiefenmaß unterschritten hat, dass Einstecken eines Werkstücks in diese Halteöffnung (7) unterbleibt.

5. Verfahren nach Anspruch 4, **dadurch gekennzeichnet, dass** die Einsteckkraft für den Fühldorn (F) auf einen Grenzwert eingestellt wird, bei dem keine Beschädigung des Fühldorns (F) auftritt.

6. Verfahren nach Anspruch 5, **dadurch gekennzeichnet, dass** durch ein Erreichen oder eine Überschreitung des Grenzwertes der Einsteckkraft die Einsteckbewegung des Fühldorns (F) in eine Entnahmebewegung desselben umgekehrt wird.

7. Verfahren nach Anspruch 6, **dadurch gekennzeichnet, dass** durch ein Erreichen oder eine Überschreitung des Grenzwertes der Einsteckkraft bewirkt wird, dass kein Werkstück in die entsprechende Halteöffnung (7) eingesetzt wird.

8. Verfahren nach einem der Ansprüche 1 bis 7, **dadurch gekennzeichnet, dass** der Transportrost (1) während des Eintauchens des Fühldorns (F) in die Halteöffnung (7) gegen seitliches Verrutschen gesichert wird.

9. Verfahren nach Anspruch einem der Ansprüche 1 bis 8, **dadurch gekennzeichnet, dass** geprüft wird, ob sowohl das Längen- und Breitenmaß als auch die Lage des Transportrostes (1) innerhalb zulässiger Abweichungen liegen.

10. Vorrichtung zur automatischen Beschickung eines Transportrostes (1), in den längliche Werkstücke in der Weise eingesetzt werden, wie Getränkeflaschen in eine mit Einzelstellplätzen für jede Getränkeflasche versehene Getränkekiste, wobei der Transportrost (1) Aufstellnester (3) für die Werkstücke sowie in einem Abstand oberhalb der Aufstellnester (3) Halteöffnungen (7) aufweist, mit einer Beschickungsstation (10), die eine Aufstellebene (11) für den Transportrost (1) aufweist, einer Arretiervorrichtung (12) zur vorübergehenden Fixierung des Transportrostes (1) in der Beschickungsstation (10), einem Beschickungsroboter (B) mit einem Greifer (29), einem von dem Greifer (29) handhabbaren Fühldorn (F), einem an dem Fühldorn (F) vorgesehenen Zentrierkonus (30), der an dem freien, im Betrieb dem Transportrost (1) zugekehrten Ende des Fühldorns (30) angeordnet ist.

11. Vorrichtung nach Anspruch 10, **dadurch gekennzeichnet,dass** der Transportrost (1) wenigstens ein Unterrost (2) und ein Oberrost (6) aufweist.

12. Vorrichtung nach Anspruch 11, **dadurch gekennzeichnet,dass** die Aufstellnester (3) in dem Unterrost (2) angeordnet sind.

13. Vorrichtung nach Anspruch 11 oder 12, **dadurch gekennzeichnet,dass** die Halteöffnungen (7) in dem Oberrost (6) angeordnet sind.

14. Vorrichtung nach Anspruch 12 oder 13, **dadurch gekennzeichnet,dass** die Aufstellnester (3) des Unterrostes (2) in unterschiedlicher Höhe vorgesehen sind.

15. Vorrichtung nach einem der Ansprüche 10 bis 14, **dadurch gekennzeichnet,dass** die Arretiervorrichtung (12) Klemmfinger (15, 16) aufweist, mit denen de Transportrost (1) zentrierbar und vorübergehend fixierbar ist.

16. Vorrichtung nach einem der Ansprüche 10 bis 15, **dadurch gekennzeichnet, dass** eine Rahmenlehre (20) mit Grenzflächen (22a, 23a, 24a, 25a) vorgesehen ist, über die geprüft wird, ob sowohl das Längen- und Breitenmaß als auch die Lage des Transportrostes (1) in der Beschickungsstation (10) innerhalb zulässiger Abweichungen liegen.

17. Vorrichtung nach einem der Ansprüche 10 bis 16, **dadurch gekennzeichnet, dass** der Fühldorn (F) mit einem Kraftbegrenzer (K) versehen ist.

18. Vorrichtung nach einem der Ansprüche 10 bis 17, **dadurch gekennzeichnet, dass** die Arretiervorrichtung (12) mit einem Kraftbegrenzer (18) versehen ist.

19. Vorrichtung nach Anspruch 17 oder 18, **dadurch gekennzeichnet, dass** der Kraftbegrenzer (K, 18, 26) wenigstens eine Druckfeder (D, 18a, 18b, 26a, 26b) und einen Initiator aufweist.

20. Vorrichtung nach einem der Ansprüche 10 bis 19, **dadurch gekennzeichnet, dass** der Transportrost (1) einen Grundrost (G) aufweist, auf welchem der Unterrost (2) aufliegt.

21. Vorrichtung nach Anspruch 20, **dadurch gekennzeichnet, dass** der Transportrost (1) einen in zwei Unterrosthälften (2a, 2b) unterteilten Unterrost (2) sowie einen in zwei Oberrosthälften (6a, 6b) unterteilten Oberrost (6) aufweist, und dass die Unterrosthälften (2a, 2b) nebeneinander auf dem Grundrost (G) liegen und die Oberrosthälften (6a, 6b) auf den Unterrosthälften (2a, 2b) angeordnet sind.

22. Vorrichtung nach Anspruch 21, **dadurch gekennzeichnet, dass** eine Positionier- und Haltevorrichtung (50) für die beiden Unterrosthälften (2a, 2b) vorgesehen ist, mit der die Unterrosthälften (2a, 2b) während der Beschickung fixierbar sind.

23. Vorrichtung nach Anspruch 22, **dadurch gekennzeichnet, dass** die Positionier- und Haltevorrichtung (50) als Positioniergreifer ausgebildet ist, dass der Positioniergreifer unterhalb der Aufstellebene (11) der Beschickungsstation (10) angeordnet ist, dass der Positioniergreifer in eine ausgefahrene Stellung bewegbar ist, in der er die Unterrosthälften (2a, 2b) greift und zur Beschickung festhält und in eine eingefahrene Stellung bewegbar ist, in der er unter die Aufstellebene (11) der Beschickungsstation (10) zurücksteht.

24. Vorrichtung nach einem der Ansprüche 10 bis 23, **dadurch gekennzeichnet, dass** ein von dem Beschickungsroboter (B) handhabbarer Transportrostheber (50) vorgesehen ist.

25. Vorrichtung nach Anspruch 24, **dadurch gekennzeichnet, dass** der Transportrostheber (50) eine Hakenaufnahme (52) aufweist und an dem Beschickungsroboter (B) ein in die Hakenaufnahme einhakbarer Aufnahmebolzen (51) vorgesehen ist.

26. Vorrichtung nach Anspruch 24 oder 25, **dadurch gekennzeichnet, dass** der Transportrostheber (50) auf einer Hebefläche (50a) angeordnete Führungsnocken (50b) aufweist.

## Claims

1. Method for inserting elongate steel workpieces into a transport grate (1), which must be conveyed together therewith through a heat-treatment furnace in order to heat-treat the workpieces,
- the transport grate (1) being provided with placement recesses (3) for the workpieces and, with spacing above the placement recesses (3), with holding openings (7), the workpieces being fitted through the holding openings (7), and, in the inserted state, being laterally held by the holding openings (7) with spacing,
- the desired position of each holding opening (7) being in vertical alignment above a placement recess (3), but the actual position of each holding opening (7) being able to deviate from the vertical alignment, **characterised in that** a loading robot (B) is provided whose paths and angles of movement are measured by a position measuring system and are forwarded to an electronic control unit,
- that the loading robot (B) moves a sensor mandrel (F) into a vertical position above a stored desired position of a holding opening (7) of the transport grate (1),
- that the free end of the sensor mandrel (F), which end faces the holding opening (7), has a locating cone (30),
- that the locating cone (30) is introduced, with lateral play, into the holding opening (7), the loading robot (B) holding the sensor mandrel (F) accurately in vertical alignment,
- that the remaining axes of movement of the loading robot (B) are set to be flexible to such an extent
- that the loading robot (B) is automatically guided into the actual position of the holding opening (7) during the introduction movement of the sensor mandrel (F),
- that the loading robot (B) stores the located actual position of the holding opening (7),
- that the loading robot (B) grips a workpiece and moves into the stored actual position of the holding opening (7), and
- that the workpiece is then pushed through the holding opening (7) and is positioned in the placement recess (3) of the transport grate (1).

2. Method according to claim 1, **characterised in that** the loading robot (B) firstly introduces the sensor mandrel (F) into each of the holding openings (7) of the transport grate (1) and the actual position of the respective holding opening (7) is temporarily stored, and **in that** the loading robot (B) then successively grips the workpieces and inserts one workpiece at one of the stored actual positions into the transport grate (1) in each case.

3. Method according to claim 1 or claim 2, **characterised in that** the sensor mandrel (F) is moved as far as the base of the placement recess (3) of the transport grate (1) during the introduction into a holding opening (7) of the transport grate (1), and **in that** the depth position which is reached by the sensor mandrel (F) in the placement recess (3) is stored.

4. Method according to any one of claims 1 to 3, **characterised in that**, when a sensor mandrel (F) was not able to be inserted into a holding opening (7) or the depth of insertion has fallen below a defined depth measurement, the insertion of a workpiece into this holding opening (7) is not carried out.

5. Method according to claim 4, **characterised in that** the insertion force for the sensor mandrel (F) is set to a limit value at which the sensor mandrel (F) will not be damaged.

6. Method according to claim 5, **characterised in that** the insertion movement of the sensor mandrel (F) is reversed to a removal movement thereof by the limit value of the insertion force being reached or exceeded.

7. Method according to claim 6, **characterised in that** the limit value of the insertion force being reached or exceeded results in a workpiece not being inserted into the corresponding holding opening (7).

8. Method according to any one of claims 1 to 7, **characterised in that** the transport grate (1) is secured against lateral slippage during the introduction of the sensor mandrel (F) into the holding opening (7).

9. Method according to any one of claims 1 to 8, **characterised in that** it is verified as to whether both the length and width measurements and the position of the transport grate (1) lie within permissible deviations.

10. Device for automatically loading a transport grate (1), into which elongate workpieces are inserted in the manner of drinks bottles in a drinks crate, which is provided with individual locations for each drinks bottle, the transport grate (1) having placement recesses (3) for the workpieces and, with spacing above the placement recesses (3), holding openings (7), having a loading station (10) which has a placement level (11) for the transport grate (1), an arresting device (12) for temporarily fixing the transport grate (1) in the loading station (10), a loading robot (B) having a gripper (29), a sensor mandrel (F) which can be operated by the gripper (29), a locating cone (30) which is provided on the sensor mandrel (F) and which is arranged at the free end of the sensor mandrel (30), which end faces the transport grate (1) during operation.

11. Device according to claim 10, **characterised in that** the transport grate (1) has at least one lower grate (2) and one upper grate (6).

12. Device according to claim 11, **characterised in that** the placement recesses (3) are arranged in the lower grate (2).

13. Device according to claim 11 or claim 12, **characterised in that** the holding openings (7) are arranged in the upper grate (6).

14. Device according to claim 12 or claim 13, **characterised in that** the placement recesses (3) of the lower grate (2) are provided at different heights.

15. Device according to any one of claims 10 to 14, **characterised in that** the arresting device (12) has clamping fingers (15, 16), by means of which the transport grate (1) can be located and temporarily fixed.

16. Device according to any one of claims 10 to 15, **characterised in that** a frame gauge (20) having interfaces (22a, 23a, 24a, 25a) is provided, by means of which gauge (20) it is verified as to whether both the length and width measurements and the position of the transport grate (1) in the loading station (10) lie within permissible deviations.

17. Device according to any one of claims 10 to 16, **characterised in that** the sensor mandrel (F) is provided with a force limitation device (K).

18. Device according to any one of claims 10 to 17, **characterised in that** the arresting device (12) is provided with a force limitation device (18).

19. Device according to claim 17 or claim 18, **characterised in that** the force limitation device (K, 18, 26) has at least one compression spring (D, 18a, 18b, 26a, 26b) and an initiator.

20. Device according to any one of claims 10 to 19, **characterised in that** the transport grate (1) has a base grate (G) on which the lower grate (2) rests.

21. Device according to claim 20, **characterised in that** the transport grate (1) has a lower grate (2), which is subdivided into two lower grate halves (2a, 2b), and an upper grate (6), which is subdivided into two upper grate halves (6a, 6b), and **in that** the lower grate halves (2a, 2b) are located beside each other on the base grate (G) and the upper grate halves (6a, 6b) are arranged on the lower grate halves (2a, 2b).

22. Device according to claim 21, **characterised in that** there is provided, for the two lower grate halves (2a, 2b), a positioning and holding device (50), by means of which the lower grate halves (2a, 2b) can be fixed during the loading operation.

23. Device according to claim 22, **characterised in that** the positioning and holding device (50) is in the form of a positioning gripper, **in that** the positioning gripper is arranged below the placement level (11) of the loading station (10), **in that** the positioning gripper can be moved into an extended position, in which it grips the lower grate halves (2a, 2b) and retains them for the loading operation, and can be moved into a retracted position, in which the positioning gripper remains below the placement level (11) of the loading station (10).

24. Device according to any one of claims 10 to 23, **characterised in that** there is provided a transport grate lifting device (50) which can be operated by the loading robot (B) .

25. Device according to claim 24, **characterised in that** the transport grate lifting device (50) has a hook receiving element (52) and there is provided, on the loading robot (B), a receiving pin (51) which can be hooked into the hook receiving element.

26. Device according to claim 24 or claim 25, **characterised in that** the transport grate lifting device (50) has guiding cams (50b) which are arranged on a lifting face (50a).

## Revendications

1. Procédé de mise en place de pièces allongées en acier à traiter, dans une grille de transport (1) qui, pour le traitement thermique des pièces, est acheminée conjointement avec celles-ci à travers un four de traitement thermique,
- la grille de transport (1) étant munie d'alvéoles de pose (3) pour les pièces à traiter et d'orifices de retenue (7) agencés à distance au-dessus des alvéoles de pose (3), sachant que les pièces à traiter sont enfichées à travers les orifices de retenue (7) pour que, en position enfichée, elles soient maintenues à distance latérale les unes des autres par les orifices de retenue (7),
- la position théorique de chaque orifice de retenue (7) étant définie en alignement vertical au-dessus d'une alvéole de pose (3), mais la position effective de chaque orifice de retenue (7) pouvant s'écarter de l'alignement vertical, **caractérisé en ce qu'**il est prévu un robot de chargement (B), dont les trajectoires et les angles de déplacement sont mesurés par un système de mesure de position et sont transmis à une commande électronique,
- **en ce que** le robot de chargement (B) déplace un mandrin palpeur (F) en position verticale au-dessus d'une position théorique mémorisée d'un orifice de retenue (7) de la grille de transport (1),
- **en ce que** l'extrémité libre du mandrin palpeur (F) orientée vers l'orifice de retenue (7) comporte un cône de centrage (30),
- **en ce que** le cône de centrage (30) plonge avec un jeu dans l'orifice de retenue (7), sachant que le robot de chargement (B) maintient le mandrin palpeur (F) exactement dans son orientation verticale,
- **en ce que** les autres axes de déplacement du robot de chargement (B) sont définis avec une flexibilité telle
- que le robot de chargement (B) est guidé automatiquement dans la position effective de l'orifice de retenue (7) pendant le mouvement d'introduction du mandrin palpeur (F),
- **en ce que** le robot de chargement (B) mémorise la position effective trouvée de l'orifice de retenue (7),
- **en ce que** le robot de chargement (B) saisit une pièce à traiter et la déplace dans la position effective mémorisée de l'orifice de retenue (7), et
- **en ce que** la pièce à traiter est alors enfichée à travers l'orifice de retenue (7) et est posée dans l'alvéole de pose (3) de la grille de transport (1).

2. Procédé selon la revendication 1, **caractérisé en ce que** le robot de chargement (B) introduit le mandrin palpeur (F) d'abord dans chacun des orifices de retenue (7) de la grille de transport (1) et, à cet effet, la position effective de chacun des orifices de retenue (7) est mémorisée temporairement, et **en ce que** le robot de chargement (B) saisit ensuite les pièces à traiter les unes après les autres et pose chaque pièce au niveau de l'une des positions effectives mémorisées dans la grille de transport (1).

3. Procédé selon la revendication 1 ou 2, **caractérisé en ce que** le mandrin palpeur (F) est déplacé pendant le mouvement d'introduction dans un orifice de retenue (7) de la grille de transport (1) jusqu'au fond de l'alvéole de pose (3) de la grille de transport (1), et **en ce que** la position en profondeur atteinte par le mandrin palpeur (F) dans l'alvéole de pose (3) est enregistrée en mémoire.

4. Procédé selon l'une quelconque des revendications 1 à 3, **caractérisé en ce que**, ensuite, si un mandrin palpeur (F) n'a pas pu être introduit dans un orifice de retenue (7) ou si la profondeur d'introduction est inférieure à une valeur définie, aucune pièce à traiter n'est enfichée dans cet orifice de retenue (7).

5. Procédé selon la revendication 4, **caractérisé en ce que** la force d'introduction d'un mandrin palpeur (F) est réglée à une valeur limite, à laquelle le mandrin palpeur (F) ne peut pas être endommagé.

6. Procédé selon la revendication 5, **caractérisé en ce que** chaque fois que la valeur limite de la force d'introduction est atteinte ou est dépassée, le mouvement d'introduction du mandrin palpeur (F) est inversé en mouvement d'extraction de celui-ci.

7. Procédé selon la revendication 6, **caractérisé en ce que** chaque fois que la valeur limite de la force d'introduction est atteinte ou est dépassée, il est fait en sorte qu'aucune pièce à traiter ne soit insérée dans l'orifice de retenue (7) correspondant.

8. Procédé selon l'une quelconque des revendications 1 à 7, **caractérisé en ce que** la grille de transport (1) est bloquée contre tout glissement latéral pendant l'introduction du mandrin palpeur (F) dans l'orifice de retenue (7).

9. Procédé selon l'une quelconque des revendications 1 à 8, **caractérisé en ce qu'**il est prévu de contrôler que les valeurs de longueur et de largeur, ainsi que la position de la grille de transport (1) se situent à l'intérieur d'une fourchette de divergences admissibles.

10. Dispositif de chargement automatique d'une grille de transport (1), dans laquelle des pièces à traiter allongées sont insérées de manière similaire à des bouteilles dans une caisse à bouteilles munie de zones de rangement séparées pour chaque bouteille, la grille de transport (1) étant munie d'alvéoles de pose (3) pour les pièces à traiter, ainsi que d'orifices de retenue (7) agencés à distance au-dessus des alvéoles de pose (3), comprenant un poste de chargement (10), qui est muni d'un plan de pose (11) pour la grille de transport (1), un dispositif d'arrêt (12) pour bloquer temporairement la grille de transport (1) dans le poste de chargement (10), un robot de chargement (B) muni d'une pince (29), un mandrin palpeur (F) pouvant être manoeuvré par la pince (29), un cône de centrage (30) qui est prévu au niveau du mandrin palpeur (F) et qui est agencé sur l'extrémité libre du mandrin palpeur (F), orientée vers la grille de transport (1).

11. Dispositif selon la revendication 10, **caractérisé en ce que** la grille de transport (1) est constituée au moins par une grille inférieure (2) et une grille supérieure (6).

12. Dispositif selon la revendication 11, **caractérisé en ce que** les alvéoles de pose (3) sont agencées dans la grille inférieure (2).

13. Dispositif selon la revendication 11 ou 12, **caractérisé en ce que** les orifices de retenue (7) sont réalisés dans la grille supérieure (6).

14. Dispositif selon la revendication 12 ou 13, **caractérisé en ce que** les alvéoles de pose (3) de la grille inférieure (2) sont prévues à des hauteurs différentes.

15. Dispositif selon l'une quelconque des revendications 10 à 14, **caractérisé en ce que** le dispositif d'arrêt (12) comporte des doigts de serrage (15, 16), par lesquels la grille de transport (1) peut être centrée et bloquée temporairement.

16. Dispositif selon l'une quelconque des revendications 10 à 15, **caractérisé en ce qu'**il est prévu un cadre gabarit (20) avec des faces de délimitation (22a, 23a, 24a, 25a), qui permet de vérifier que les valeurs de longueur et de largeur, ainsi que la position de la grille de transport (1) dans le poste de chargement (10) se situent à l'intérieur d'une fourchette de divergences admissibles.

17. Dispositif selon l'une quelconque des revendications 10 à 16, **caractérisé en ce que** le mandrin palpeur (F) est muni d'un limiteur de force (K).

18. Dispositif selon l'une quelconque des revendications 10 à 17, **caractérisé en ce que** le dispositif d'arrêt (12) est muni d'un limiteur de force (18).

19. Dispositif selon la revendication 17 ou 18, **caractérisé en ce que** le limiteur de force (K, 18, 26) comporte au moins un ressort de compression (D, 18a, 18b, 26a, 26b) et un initiateur.

20. Dispositif selon l'une quelconque des revendications 10 à 19, **caractérisé en ce que** la grille de transport (1) comporte une grille de base (G), sur laquelle est posée la grille inférieure (2).

21. Dispositif selon la revendication 20, **caractérisé en ce que** la grille de transport (1) comporte une grille inférieure (2) divisée en deux demi-grilles inférieures (2a, 2b), ainsi qu'une grille supérieure (6) divisée en deux demi-grilles supérieures (6a, 6b), et **en ce que** les demi-grilles inférieures (2a, 2b) sont disposées l'une à côté de l'autre sur la grille de base (G) et les demi-grilles supérieures (6a, 6b) sont disposées sur les demi-grilles inférieures (2a, 2b).

22. Dispositif selon la revendication 21,
**caractérisé en ce qu'**il est prévu un dispositif de positionnement et de retenue (50) pour les deux demi-grilles inférieures (2a, 2b), par lequel les demi-grilles inférieures (2a, 2b) sont bloquées pendant le chargement.

23. Dispositif selon la revendication 22, **caractérisé en ce que** le dispositif de positionnement et de retenue (50) est conçu sous forme de pince de positionnement, **en ce que** la pince de positionnement est disposée en dessous du plan de pose (11) du poste de chargement (10), **en ce que** la pince de positionnement peut être déplacée dans une position extraite, dans laquelle elle saisit les demi-grilles inférieures (2a, 2b) et les bloque pour le chargement, et peut être déplacée dans une position rentrée, dans laquelle elle est posée en retrait sous le plan de pose (11) du poste de chargement (10).

24. Dispositif selon l'une quelconque des revendications 10 à 23, **caractérisé en ce qu'**il est prévu un élévateur de grille de transport (50) qui peut être manoeuvré par le robot de chargement (B).

25. Dispositif selon la revendication 24, **caractérisé en ce que** l'élévateur de grille de transport (50) comporte un logement formant crochet (52) et il est prévu sur le robot de chargement (B) un boulon (51) qui peut être accroché dans le logement formant crochet.

26. Dispositif selon la revendication 24 ou 25, **caractérisé en ce que** l'élévateur de grille de transport (50) comporte une came de guidage (50b) agencée sur une surface de levage (50a).
